# EUROPEAN PATENT APPLICATION

(11) **EP 4 807 877 A1**
(43) Date of publication of application: **16.09.2026**
(21) Application number: 25738839.7
(22) Date of filing: 08.01.2025
(51) Int. Cl.: H01M 50/271, H01M 50/60, H01M 50/519, H01M 50/284, H01M 50/569, H01M 10/42

(54) **CELL MODULE ASSEMBLY, BATTERY PACK, AND ENERGY STORAGE SYSTEM**

(30) Priority: 12.01.2024 KR 20240005421
(71) Applicant: LG Energy Solution, Ltd., Seoul 07335 (KR)
(72) Inventor: LEE, Dong Geun, Daejeon 34122 (KR); KIM, Kiyoun, Daejeon 34122 (KR)
(74) Representative: Plasseraud IP
(86) International application number: PCT/KR2025/000384
(87) International publication number: WO 2025/150872

(57) **Abstract**

A cell module assembly according an embodiment of the present disclosure may comprise a battery cell stack in which a plurality of battery cells are stacked; a busbar housing disposed on a surface that faces the electrode leads of the battery cells, an ICB (Inter Connection Board) that is disposed on the busbar housing, and includes a printed circuit board having at least one element for transmitting data between the battery cells and a BMS (Battery Management System), and a sensing cable connector to which a sensing cable is coupled, and a connector cover that covers the outer surfaces of the sensing cable connector and a connector pin of the sensing cable.

## Description

### TECHNICAL FIELD

### Cross Citation with Related Application(s)

This application claims the benefit of priority to Korean Patent Application No. 10-2024-0005421, filed on January 12, 2024, the disclosure of which is incorporated herein by reference in its entirety.

The present disclosure relate to a cell module assembly, a battery pack and an energy storage system, and more particularly, to a cell module assembly, a battery pack and an energy storage system, comprising a connector cover for preventing the penetration of electrolyte or moisture at the part where the sensing cable is coupled to the sensing cable connector of the ICB.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Presently, commercially available batteries include nickel-cadmium batteries, nickel-hydrogen batteries, nickel-zinc batteries, and lithium secondary batteries. Of these batteries, the lithium secondary batteries have come into the spotlight because they have advantages, for example, being freely charged and discharged, and having very low self-discharge rate and high energy density.

Such secondary batteries have been widely used in medium and large devices such as electric vehicles and energy storage systems (ESSs), as well as in small devices such as portable electronic devices, and the extent of their use is rapidly increasing. Furthermore, in recent years, there has been a growing trend in the use of battery packs for power storage purposes, not only for vehicles but also for residential applications.

In cell module assemblies, battery packs, and energy storage systems, an ICB (Inter Connection Board) that transmits sensing data and data for maintaining and managing the battery cells between the battery cells and the BMS is disposed in the busbar housing, and a sensing cable is electrically connected between the ICB and the BMS (Battery Management System). For this purpose, the ICB includes a sensing cable connector to which the sensing cable may be connected. However, according to the prior art, if electrolyte or moisture leaking from a battery cell comes into contact with the portion where the sensing cable and sensing cable connector are coupled, there is a risk that an electrical short circuit (short) occurs. In that case, if sparks caused by an electrical short circuit come into contact with the battery cell, there is a risk that a fire spreads. Therefore, there is a need to develop a method that can effectively protect the portion where the sensing cables and sensing cable connectors are coupled.

### DETAILED DESCRIPTION OF THE INVENTION

### Technical Problem

Therefore, it is an object of the present disclosure to provide a cell module assembly, a battery pack and an energy storage system, which provide a member that covers a sensing cable connector installed on an ICB and to which a sensing cable is connected, and therefore, can prevent electrical short circuits and resulting fires caused by electrolyte leakage from a battery cell and/or moisture from the outside at the portion where the sensing cable and the sensing cable connector are electrically connected.

However, the technical objects to be solved by embodiments of the present disclosure are not limited to the above-described objects, and can be variously expanded within the scope of the technical idea included in the present disclosure.

### Technical Solution

In an illustrative aspect of the present disclosure, provided is a cell module assembly comprising: a battery cell stack in which a plurality of battery cells are stacked; a busbar housing disposed on a surface that faces the electrode leads of the battery cells, an ICB (Inter Connection Board) that is disposed on the busbar housing, and includes a printed circuit board having at least one element for transmitting data between the battery cells and a BMS (Battery Management System), and a sensing cable connector to which a sensing cable is coupled, and a connector cover that covers the outer surfaces of the sensing cable connector and the connector pin of the sensing cable.

In an embodiment, penetration of electrolyte or moisture into the point where the sensing cable and the sensing cable connector are coupled may be prevented by the connector cover.

In an embodiment, the connector cover may comprise a main body including a recessed accommodating portion, and at least the sensing cable connector and the connector pin of the sensing cable may be accommodated inside the accommodating portion.

In an embodiment, the main body may further comprise a support rib protruding along a circumference of the accommodating portion, and the support rib may come into contact with the outer surface of the ICB.

In an embodiment, the connector cover may be coupled to at least one of the busbar housing and the ICB, and the connector cover further may comprise: a first coupling portion including a locking hook so as to have a hook coupling structure; and a second coupling portion including a rib accommodating portion so as to have a fit coupling structure.

In an embodiment, the locking hook of the first coupling portion may be hook-coupled to at least one of the ICB and the busbar housing, and the rib accommodating portion of the second coupling portion may be fitted to a coupling rib protruding from the busbar housing.

In an embodiment, the first coupling portion may be provided in at least one on the lower edge of the main body of the connector cover, and is hook-coupled to the lower end of the ICB, and the second coupling portion may be provided on the upper edge of the main body of the connector cover, and be fitted to the coupling rib formed along the upper edge of the busbar housing in the width direction of the busbar housing.

In an embodiment, the connector cover may further comprise a first coupling portion for hook coupling, and the first coupling portion may comprise a locking hook.

In an embodiment, the first coupling portion is the locking hook, and may comprise: a first extension portion protrusively extending from the main body; and a hooking protrusion formed at an end of the first extension portion.

In an embodiment, the first extension portion extends so as to protrude perpendicularly from the main body, and the hooking protrusion may bend and extend again from an end of the first extension portion.

In an embodiment, the first coupling portion may comprise an L-shape or a rotated shape thereof.

In an embodiment, the connector cover may further comprise a second coupling portion for fitting, and the second coupling portion may include a rib accommodating portion.

In an embodiment, the second coupling portion configured to form the rib accommodating portion, may comprise: a bent portion including a second extension portion extending from the main body and a third extension portion bending again at the end of the second extension portion, and a fourth extension portion extending from the main body perpendicular to the second extension portion, and disposed in parallel with the third extension portion.

In an embodiment, the second extension portion and the third extension portion of the bent portion may have a plate shape, respectively.

In an embodiment, the second coupling portion may comprise a "⊏" shape or a rotated shape thereof.

In an embodiment, the connector cover may further comprise a support portion provided at both ends of the main body that face each other, and the support portion may comprise a support surface that can come into contact with the outer surface of the ICB.

In another illustrative aspect of the present disclosure, provided is a battery pack comprising: the cell module assembly according to the above-described embodiments; an electrical unit that comprises the BMS disposed on one surface of the cell module assembly; and a pack case that houses the cell module assembly and the electrical unit.

In yet another illustrative aspect of the present disclosure, provided is an energy storage system comprising the battery pack according to the above-described embodiments.

### Advantageous Effects

According to specific embodiments of the present disclosure, by providing a member that covers the sensing cable connector to which the sensing cable is connected, it is possible to prevent electrical short circuits and resulting fires that may occur due to electrolyte leakage from a battery cell and/or external moisture at the part where the sensing cable and sensing cable connector are electrically connected.

The effects of the present disclosure are not limited to the effects mentioned above, and additional other effects not mentioned above will be clearly understood from the description of the appended claims by those skilled in the art.

### [BRIEF DESCRIPTION OF THE DRAWING]

FIG. 1 is a perspective view of a cell module assembly and an electrical unit according to an embodiment of the present disclosure.
FIG. 2 is an exploded perspective view showing a state in which the connector cover is separated in FIG. 1.
FIG. 3 is a partially enlarged view of FIG. 2.
FIG. 4 is an exploded perspective view showing a state in which the ICB, sensing cable, and electrical unit are further separated in FIG. 2.
FIG. 5 is a side view of FIG. 4.
FIG. 6 is a reference diagram of the busbar electrode and ICB of FIG. 1.
FIG. 7 is a perspective view showing only the connector cover included in the cell module assembly of FIG. 1.
FIG. 8 is a bottom perspective view of the connector cover of FIG. 7.
FIG. 9 is a bottom perspective view sequentially showing a state in which the connector cover of FIG. 7 is coupled to the busbar housing assembly.
FIG. 10 is a partially enlarged view of (c) of FIG. 9.
FIG. 11 is a perspective view showing a state before the connector cover of FIG. 7 is installed on the busbar housing assembly.
FIG. 12 is a perspective view showing a state after the connector cover of FIG. 7 is installed on the busbar housing assembly.
FIG. 13 is a reference drawing of FIG. 1, showing the cell module assembly and electrical unit of FIG. 1 from a different angle.
FIG. 14 shows a case where the cell module assembly and electrical unit of FIGS. 1 to 13 are housed in a pack case to form a battery pack.
FIG. 15 shows a completed battery pack in which the respective components of the battery pack of FIG. 14 are assembled.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, embodiments of the present disclosure will be described with reference to the accompanying drawings.

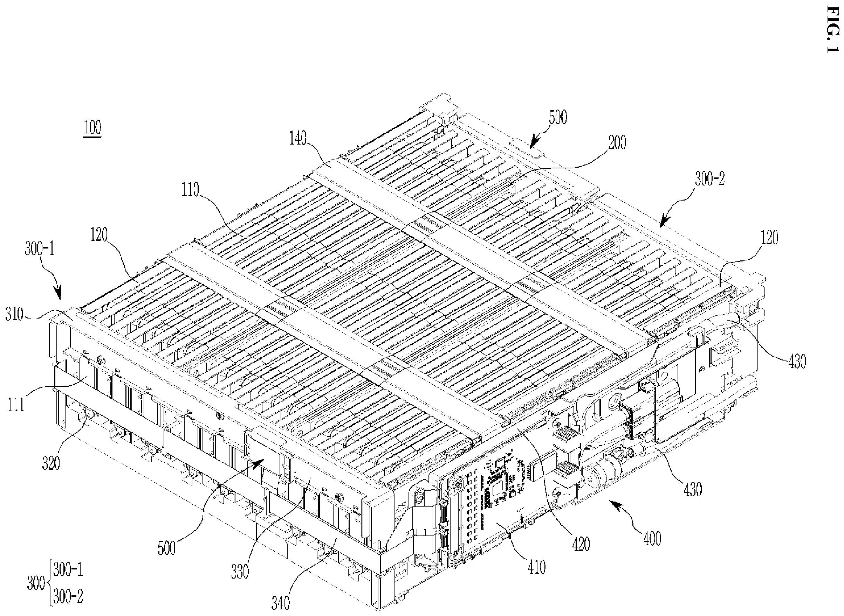

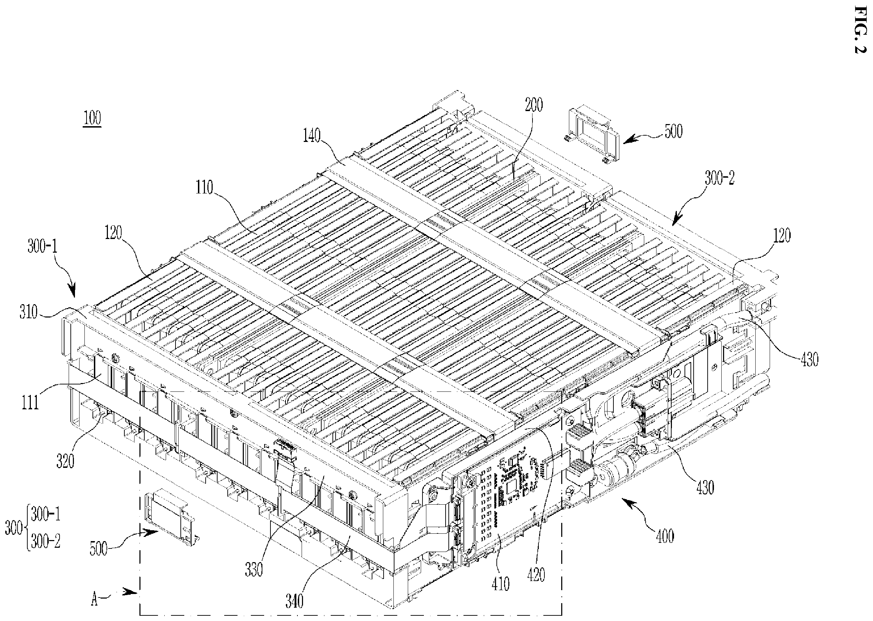

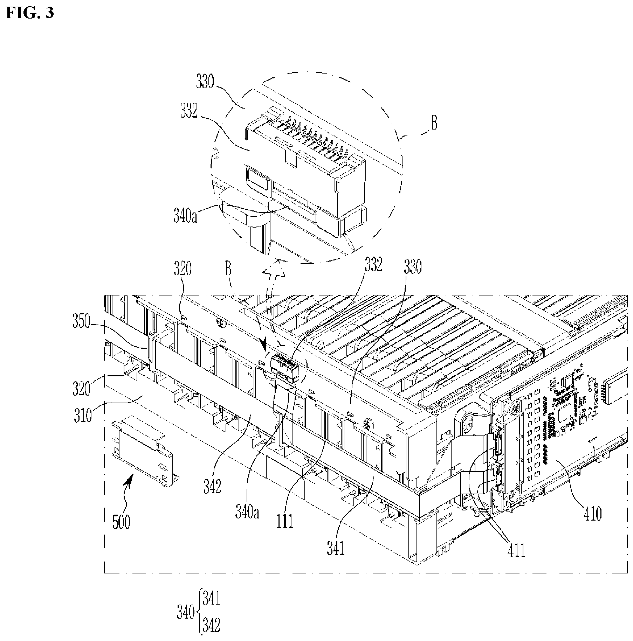

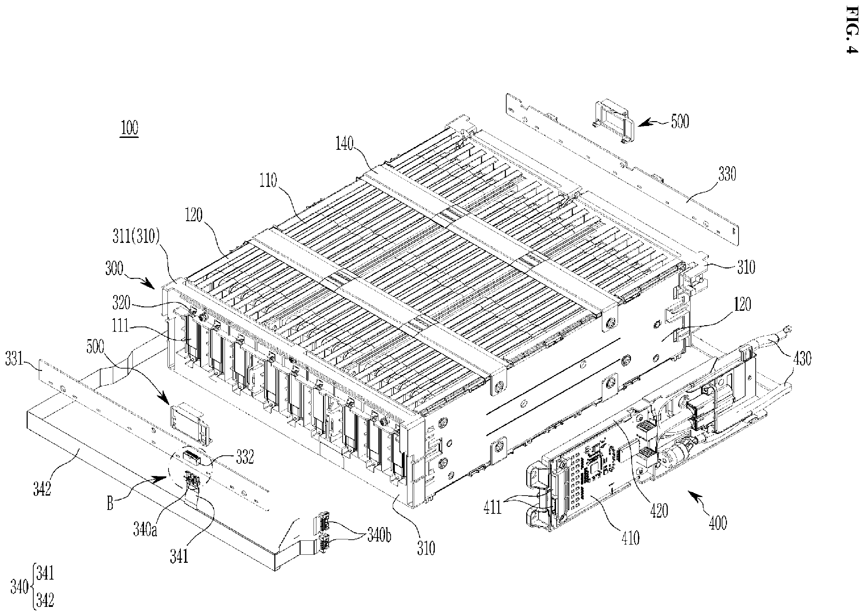

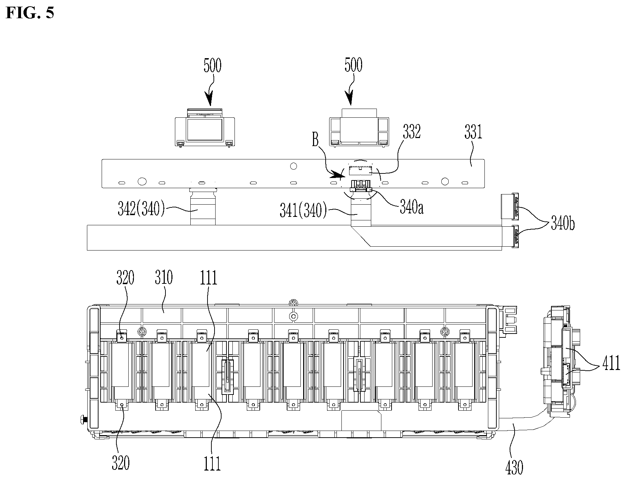

FIG. 1 is a perspective view of a cell module assembly 100 and an electrical unit (electrical device assembly) according to an embodiment of the present disclosure. FIG. 2 is an exploded perspective view showing a state in which the connector cover is separated in FIG. 1. FIG. 3 is a partially enlarged view of FIG. 2. FIG. 4 is an exploded perspective view showing a state in which the ICB, sensing cable, and electrical unit are further separated in FIG. 2. FIG. 5 is a side view of FIG. 4.

First, referring to FIG. 1, a plurality of battery cells 110 are provided to form a battery cell stack. The cell module assembly 100 includes the battery cell stack, an end plate 120, and a busbar housing assembly 300. It may further include a cut-off member 200. The busbar housing assembly 300 according to an embodiment of the present disclosure includes a connector cover 500 as one component of the busbar housing assembly 300. The connector cover 500 will be described in more detail below.

First, a pair of end plates 120 are respectively provided on the outermost side of the battery cell stack. The end plates 120 are disposed in parallel with the battery cells 110. Further, a pair of busbar housing assemblies 300 are disposed on the surface that faces the electrode leads 111 of each battery cell 110 of the battery cell stack. In the illustrative embodiment of FIG. 1, a pair of busbar housing assemblies 300 are disposed on both side surfaces of a plurality of battery cell stacks. Each busbar housing assembly 300 is disposed in a direction orthogonal to the longitudinal direction of the battery cells 110. Further, a pair of end plates 120 are disposed on the front and rear surfaces of the battery cell stack, respectively. Both ends of each of the pair of busbar housing assemblies 300 are connected to the pair of end plates 120, respectively.

The end plate 120 may be made of, for example, a metal material, for example, aluminum, iron, a stainless steel or the like. The busbar housing assembly 300 includes a busbar housing 310 in which busbar electrodes 320 and an ICB (Inter Connector Board) 330 are disposed, and the busbar housing 310 may be made of, for example, a plastic material, and may be fabricated by plastic injection molding. Additionally, the busbar housing 310 may be fabricated integrally with the sensing cable fixing member 350 described below through plastic injection molding.

In an illustrative embodiment of FIG. 1, each of the upper and lower sides between a pair of end plates 120 may include at least one strap 140 for connecting between the pair of end plates 120. The strap 140 strengthens the binding of the cell module assembly 100. More specifically, it strengthens the binding of the pair of end plates 120, and the plurality of battery cell stacks disposed therebetween. Thereby, it is possible to prevent distortion in the alignment of the plurality of battery cell stacks.

The cut-off member 200 is disposed in contact with a large area of the battery cell 110, and the cut-off member 200 is disposed between adjacent battery cells 110, and/or between the outermost battery cell 110 of the battery cell stack and the end plate 120. The cut-off member 200 may cut off flames or sparks emitted from a battery cell 110 where a thermal event of battery cell 110 has occurred from propagating to adjacent battery cells 110, thereby prevents thermal runaway between cells. The cut-off member 200 may be disposed between the plurality of battery cells 110. The illustrative embodiment of FIG. 1 shows a case where an cut-off member 200 is disposed for every six battery cells 110. The present disclosure is not limited to those shown in the figure, and various modifications and variations can be made to the embodiment.

The cut-off member 200 has a generally plate-like shape. The cut-off member 200 includes a support plate and a swelling pad. The cut-off member 200 may be included in plural numbers depending on the number of battery cells. As described above, the cut-off member 200 may be stacked together with the battery cells 110 to form the cell module assembly 100.

The support plate may be made of, for example, a metal material, a plastic material, or a combination thereof. The metal material may be for example, aluminum, iron, stainless steel, or a combination thereof. The plastic material may also be, for example, a high-strength plastic such as a reinforced plastic.

The outermost surface of the cut-off member 200 includes a pair of swelling pads. The swelling pads may be made of silicone, plastic, or a combination thereof. In the case of the plastic material, it may be, for example, a flexible plastic, such as polyurethane foam (PU foam). The swelling pad may act as a buffer when the battery cell 110 swells.

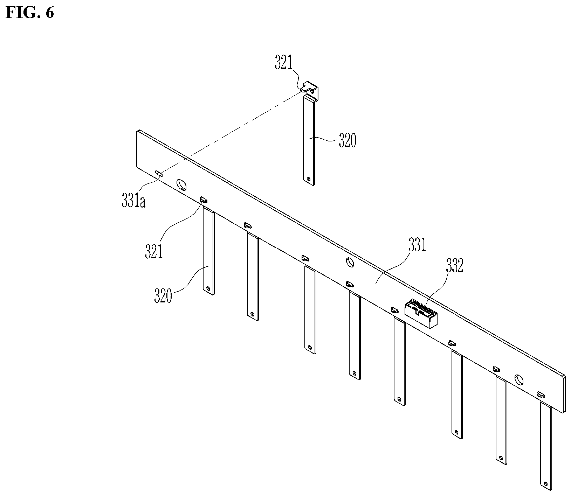

Next, the busbar housing assembly 300 and the connector cover 500, which is one component of the busbar housing assembly 300, will be described in more detail with reference to FIGS. 1 to 13. First, for ease of understanding, FIG. 2 depicts a state in which only the connector cover 500 is separated in FIG. 1. FIG. 3 depicts a partially enlarged view of FIG. 2. FIG. 4 is a perspective view showing a state in which the ICB 330, the sensing cable 340, and the electrical unit 400 are further separated in FIG. 2. FIG. 5 is a side view showing a state in which the ICB 330, the sensing cable 340, and the electrical unit 400 are further separated in FIG. 2. FIG. 6 is a reference drawing of the busbar electrode and the ICB of FIG. 1.

First, before describing the busbar housing assembly 300, the electrical unit 400 will be briefly described. The electrical unit 400 is disposed on one surface of the cell module assembly 100 (the front surface of the cell module assembly 100 in the embodiment of FIG. 1). The illustrative embodiment of FIG. 1 shows a case in which the electrical unit 400 is disposed on the outer surface of an end plate 120 disposed on the front surface of the cell module assembly 100. The electrical unit 400 includes a BMS 410, an electrical unit housing 420 that houses respective components of the electrical unit 400 (e.g., a BMS 410, a power cable 430, etc.), and a power cable 430. The BMS 410 includes a connector terminal 411 for electrical connection with the sensing cable 340. The electrical unit 400 may also include various components, such as relays, fuses, and current sensors, for controlling or managing the charging and discharging of the battery pack. The respective components of the electrical unit 400 can be embodied using electrical units typically found in battery packs, and therefore, a further detailed description of the electrical unit 400 will be omitted.

A pair of busbar housing assemblies 300 are disposed on both side surfaces of a plurality of battery cell stacks. The busbar housing assembly 300 includes a busbar housing 310, a plurality of busbar electrodes 320 disposed on the busbar housing 310, and an ICB 330.

The busbar electrodes 320 are disposed on the outer surface of the busbar housing 310, and a plurality of openings are provided near the positions where the busbar electrodes 320 are disposed. The electrode leads 111 of the battery cells 110 pass through openings in the busbar housing assembly 300 and are coupled with the busbar electrodes 320. For reference, in the drawings of the present disclosure, the electrode lead 111 of each of adjacent battery cells 110 passes through openings formed in the busbar housing 310 and are coupled to each other, with the busbar electrodes 320 being coupled thereon.

Further, an ICB 330 is disposed on the outer surface of the busbar housing 310. In the embodiment of the present disclosure, the ICB 330 is disposed on an upper part of the busbar electrodes 320.

The ICB 330 transmits sensing data between the battery cell 110 and the BMS 410. The ICB 330 is a board equipped with at least one element for transmitting sensing data, and includes a printed circuit board (PCB) 331 having a circuit pattern formed on an insulating layer and a sensing cable connector 332 to which a sensing cable 340 is connected. The ICB 330 senses current and/or voltage in the battery cell 110 and transmits the sensed data to the BMS 410 via the sensing cable 340. The BMS 410 also transmits data for maintaining and managing the battery cell 110 to the ICB 330 via the sensing cable 340, and ultimately controls the battery cell 110 electrically connected to the ICB 330.

For further detail, data regarding current and/or voltage in the battery cell 110 via the electrode lead 111 of the battery cell 110 is transmitted to the printed circuit board 331 of the ICB 330 via the busbar electrode 320 coupled to the electrode lead 111 of the battery cell 110. For reference, referring to the reference diagram of the busbar electrode and ICB in FIG. 6, a plurality of busbar electrodes 320 are electrically connected to the ICB 330 disposed on the upper part of the busbar housing 310. The upper end of the busbar electrode 320 includes a connecting portion 321 in the shape of a fitting pin, that bends and extends from the main body of the busbar electrode 320 to which the electrode lead 111 is coupled. The connecting portion 321 of the busbar electrode 320 is connected to a connecting portion 331a in the shape of an opening (hole) provided on the printed circuit board 331. The connecting portion 321 of the busbar electrode 320 may be connected to the connecting portion 331a of the printed circuit board 331, for example through soldering.

Referring again to FIGS. 1 to 5, the sensing cable 340 is disposed to extend along the circumference of the battery cell stack from the sensing cable connector 332 connected to the printed circuit board 331 of the ICB 330, and is connected to the connector terminal 411 of the BMS 410.

The sensing cable 340 includes a connector pin 340a at one end of the sensing cable 340. The connector pin 340a of the sensing cable 340 is connected to the sensing cable connector 332 of the ICB 330. Similarly, the sensing cable 340 includes a connector pin 340b at the other end of the sensing cable 340. The connector pin 340b of the sensing cable 340 is coupled to the connector terminal 411 of the BMS 410.

The point where the connector pin 340a of the sensing cable 340 and the sensing cable connector 332 of the ICB 330 are coupled is marked as B in FIGS. 3 to 5. When examining an enlarged view of the portion marked as B in FIG. 3, there is a risk that an electrical short circuit (short) occurs if electrolyte or moisture penetrates between the connector pin 340a of the sensing cable 340 and the part where the sensing cable connector 332 of the ICB 330 are coupled. Sparks generated during an electrical short circuit may cause a fire, and if sparks hit the battery cell 110, there is a risk that the fire could become significantly larger.

Therefore, according to the present disclosure, the outer surface of the connector pin 340a of the sensing cable 340 and the sensing cable connector 332 of the ICB 330, which are coupled to each other, are covered with a connector cover 500, thereby preventing in advance the risk of electrolyte or moisture penetrating into the point where the connector pin 340a of the sensing cable 340 and the sensing cable connector 332 of the ICB 330 which are the parts marked as B in FIG. 3 are coupled.

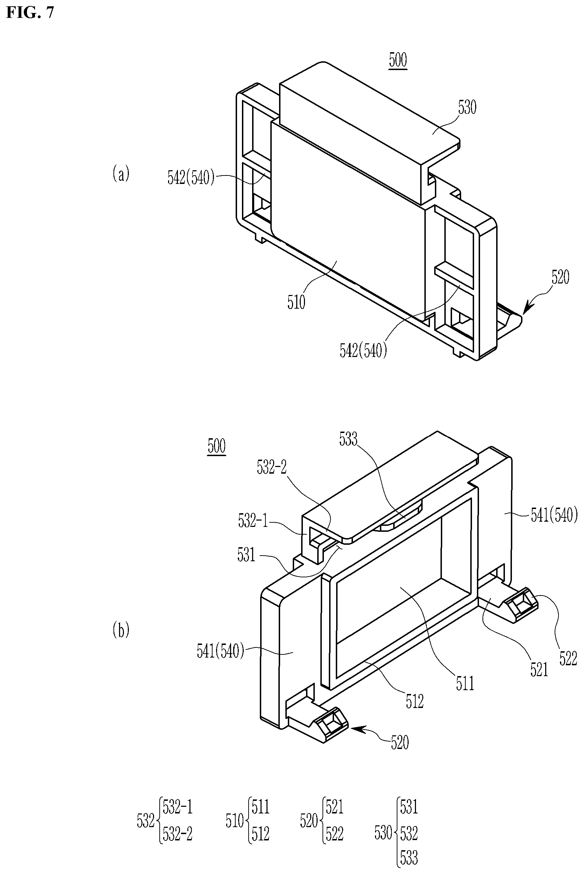

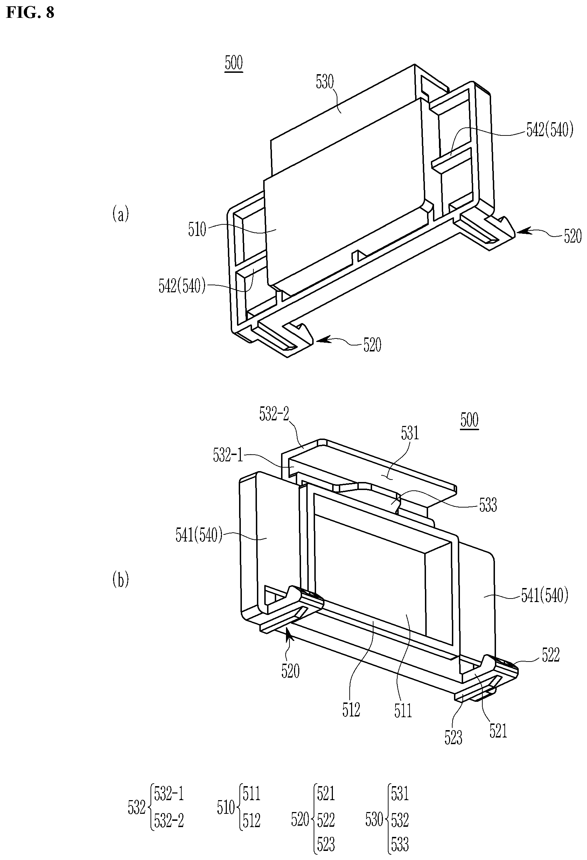

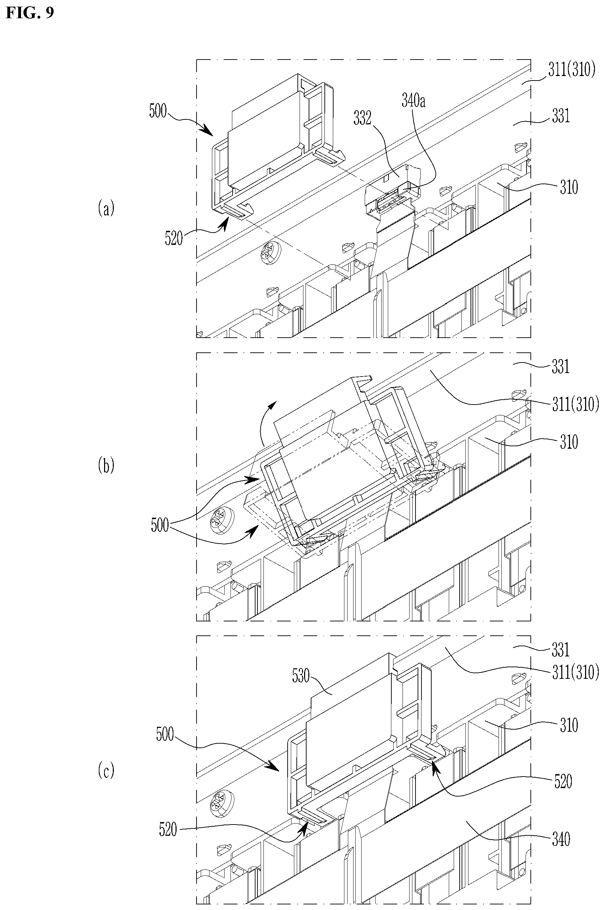

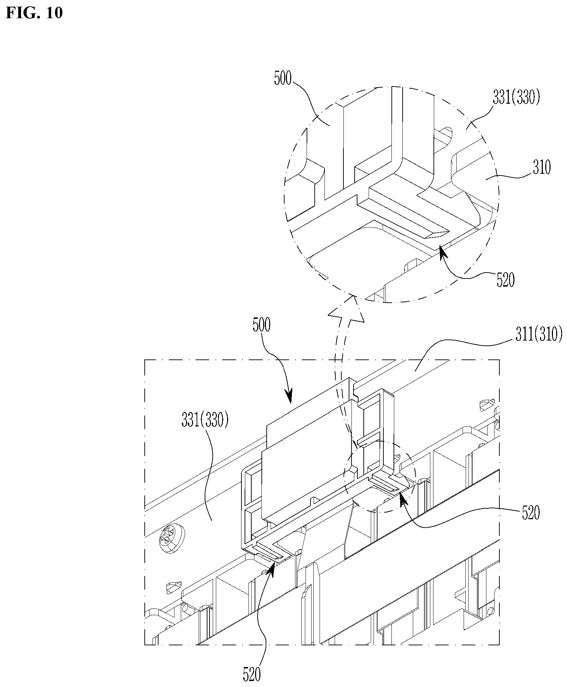

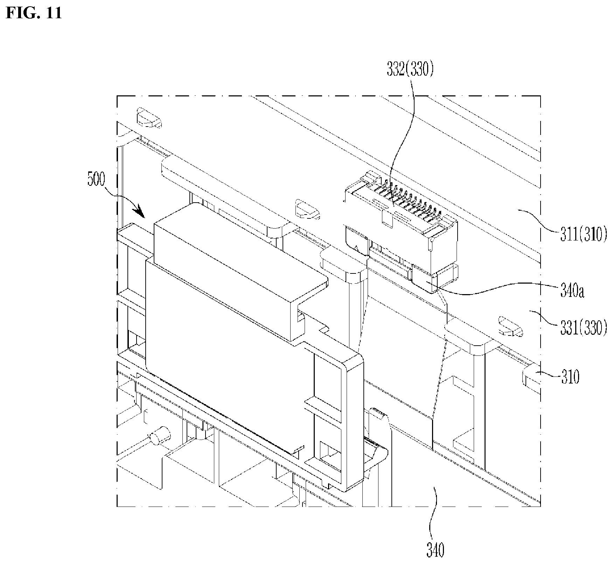

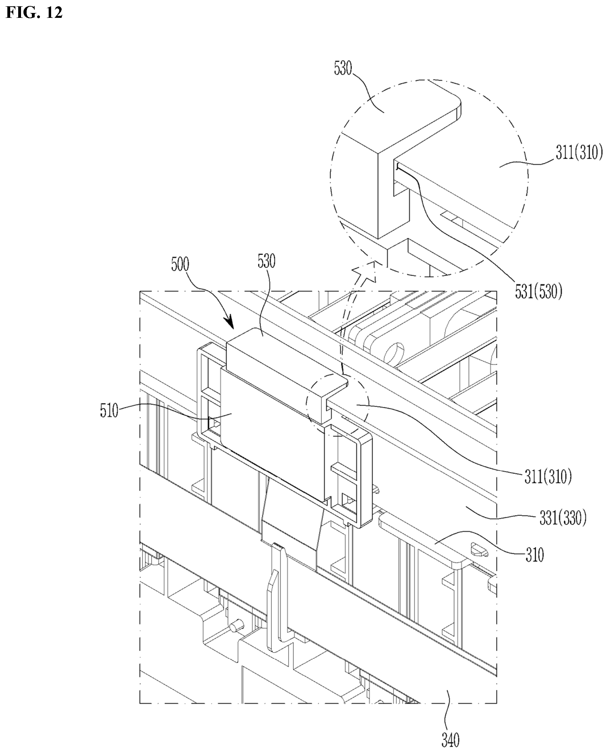

FIG. 7 is a perspective view showing only the connector cover included in the cell module assembly of FIG. 1. FIG. 8 is a bottom perspective view of the connector cover of FIG. 7. FIG. 9 is a bottom perspective view sequentially showing a state in which the connector cover of FIG. 7 is coupled to the busbar housing assembly. FIG. 10 is a partially enlarged view of (c) of FIG. 9. FIG. 11 is a perspective view showing a state before the connector cover of FIG. 7 is installed on the busbar housing assembly. FIG. 12 is a perspective view showing a state after the connector cover of FIG. 7 is installed on the busbar housing assembly.

First, in each of FIGS. 7 and 8, (a) shows the outer surface of the connector cover, and (b) shows the inner surface of the connector cover. In this specification, the outer surface of the connector cover refers to the surface of the connector cover that faces the outside of the cell module assembly. Also, the inner surface of the connector cover refers to the surface of the connector cover that faces the cell module assembly.

The connector cover 500 according to an embodiment of the present disclosure includes a main body 510, a first coupling portion 520, and a second coupling portion 530. Additionally, the connector cover 500 may further include a support portion 540.

The connector cover 500 is coupled to the busbar housing assembly 300. More specifically, it may be coupled to, for example, the busbar housing 310 and the ICB 330. The coupling method of the connector cover 500 will be described in more detail later with reference to the first coupling portion 520 and the second coupling portion 530 of the connector cover 500.

First, the main body 510 of the connector cover 500 includes an accommodating portion 511 that accommodates the sensing cable connector 332 and the connector pin 340a of the sensing cable 340 in the inside thereof. Additionally, the main body 510 may further include a support rib 512 formed along the circumference of the accommodating portion 511.

The accommodating portion 511 has a recessed structure that provides a space for accommodating at least the sensing cable connector 332 and the connector pin 340a of the sensing cable 340 in the inside thereof. A portion of the sensing cable 340 near the connector pin 340a may be further accommodated together in the accommodating portion 511. The accommodating portion 511 may have a recessed structure and include a flat surface and side surfaces surrounding the edges of the flat surface. Meanwhile, the detailed shape and size of the accommodating portion 511 are not limited to those shown in FIGS. 7 and 8. The accommodating portion 511 is sufficient if it has a recessed structure so as be able to accommodate the sensing cable connector 332 and the connector pin 340a of the sensing cable 340 in the inside thereof, and can be variously modified and changed in accordance with the shape and size of the sensing cable connector 332 and the connector pin 340a of the sensing cable 340 applied to the present disclosure.

The support rib 512 is formed along the circumference of the edge of the accommodating portion 511, and has a rib structure configured to protrude in contact with the outer surface of the ICB 330. In order to more effectively protect the sensing cable connector 332 and the connector pin 340a of the sensing cable 340 accommodated inside the accommodating portion 511 from external electrolyte or moisture, the support rib 512 is further provided to thereby ensure more airtight contact between the connector cover 500 and the ICB 330.

If the sensing cable 340 has a flat shape, the support rib 512 may have the same protruding height as a whole as described herein, but depending on the thickness of the sensing cable 340, the support rib 512 may further have a groove (not shown) through which the sensing cable 340 can pass. While the drawings of the present disclosure shows a case where the sensing cable 340 is embodied as an FFC (Flexible Flat Cable), the present disclosure is not limited thereto and various types of sensing cables may be applied.

The support rib 512 may be made of the same material as the accommodating portion 511 and may be formed integrally with it, as illustrated in the present disclosure. Alternatively, although not illustrated in the present disclosure, the support rib 512 may be formed of an elastic material, or an O-ring made of an elastic material may be added to the support rib 512, if necessary, thereby further enhancing sealing strength.

The connector cover 500 includes a first coupling portion 520 and a second coupling portion 530, each provided on the main body 510. The first coupling portion 520 has a hook coupling structure, and the second coupling portion 530 has a fit coupling structure.

For example, the first coupling portion 520 may be provided at one edge of the main body 510 of the connector cover 500, and the second coupling portion 530 may be provided at the other edge of the main body 510. The main body 510 of the connector cover 500 may be provided with the first coupling portion 520 and the second coupling portion 530, respectively, at both ends facing each other on the basis of the main body 510. For example, as illustrated in the drawings of the present disclosure, a first coupling portion 520 may be provided at the lower end of the main body 510, and a second coupling portion 530 may be provided at the upper end of the main body 510. That is, the first coupling portion 520 and the second coupling portion 530 may be provided at both ends in a vertical direction on the basis of the main body 510. However, the present disclosure is not limited to those shown in the figure, modifications and changes may be made in various ways in accordance with the environment in which the present disclosure is realized, for example, the first coupling portion 520 and the second coupling portion 530 are provided at both ends in a horizontal direction on the basis of the main body 510, depending on the structure, arrangement, and shape of the cell module assembly 100, the ICB 330, and the sensing cable connector 332.

First, the first coupling portion 520 of the connector cover 500 has a hook coupling structure with the ICB 330 (see FIGS. 9 and 10). More specifically, the first coupling portion 520 has a hook coupling structure with the printed circuit board 331, which corresponds to the main body of the ICB 330. For example, the first coupling portion 520 has a hook coupling structure with the end of the ICB 330.

The first coupling portion 520 is a locking hook, and has a first extension portion 521 that protrusively extends from the main body 510 of the connector cover 500 toward the ICB 330. The end of the first extension portion 521 includes a hooking protrusion 522. As shown in FIG. 10, the hooking protrusion 522 hooks to the lower end of the ICB 330 to form a hook coupling structure. For example, the first extension portion 521 may extend so as to protrude perpendicularly from the main body 510 of the connector cover 500, and the hooking protrusion 522 may bend and extend again from the end of the first extension portion 521. The first coupling portion 520 may include, for example, an "L" shape. Depending on the arrangement of the connector cover 500, the "L" shape may be a rotated shape.

Meanwhile, in order to further enhance the rigidity of the first coupling portion 520, the first coupling portion 520 may further include a reinforcing rib 523 further disposed on the first extension portion 521.

Furthermore, as shown in the figure, the first coupling portions 520 may be provided as a pair, each being provided on both sides of the lower end of the connector cover 500. The sensing cable 340 may pass between the first coupling portions 520 provided on both sides of the lower end of the connector cover 500. However, the present disclosure is not limited to those shown in the figure, and the number and position of the first coupling portions 520 can be variously modified and changed in accordance with the environment in which the present disclosure is applied.

In addition, in the embodiment of the present disclosure, a case where the first coupling portion 520 is hook-coupled to the lower portion of the ICB 330 has been described as one embodiment. In this case, the first coupling portion 520 can be hook-coupled only to the lower end of the ICB 330, but the busbar housing 310 is located on the rear surface of the ICB 330, so that the first coupling portion 520 may also be hook-coupled to the lower end where the ICB 330 and the busbar housing 310 are coupled. Additionally, in another embodiment, the busbar housing 310 may further include a coupling groove (not shown) or an end (not shown) provided for hook-coupling the first coupling portion 520 so that the first coupling portion 520 forms a hook coupling structure with the busbar housing 310.

The second coupling portion 530 of the connector cover 500 has a fit coupling structure with the busbar housing 310 (see FIGS. 9 and 12). First, the busbar housing 310 includes a coupling rib 311 that protrudes in a horizontal direction. For example, the coupling rib 311 may be formed to extend along the upper edge of the busbar housing 310 in the width direction of the busbar housing 310 (see FIG. 4).

The second coupling portion 530 of the connector cover 500 includes a rib insert portion 531 that accommodates the coupling rib 311 of the busbar housing 310. The second coupling portion 530 of the connector cover 500 extends from the main body 510 of the connector cover 500 (e.g., the upper end of the main body 510), and includes a bent portion 532 including a second extension portion 532-1 and a third extension portion 532-2 that bends and extends again from the end of the second extension portion, and a fourth extension portion 533 that extends perpendicularly to the second extension portion 532-1 from the main body 510. The third extension portion 532-2 and the fourth extension portion 533 may be disposed in parallel to each other.

The bent portion 532 extends upward from the upper end of the main body 510 of the connector cover 500 and then bends back toward the busbar housing 310. For example, the bent portion 532 has a " ¬" shape (i.e., up-and-down symmetrical "L" shape). For example, the bent portion 532 includes a second extension portion 532-1 having a plate shape that extends upward from the upper end of the main body 510 of the connector cover 500, and a third extension portion 532-2 having a plate shape that bends and extends again from the end of the second extension portion. For example, the second extension portion 532-1 and the third extension portion 532-2 may be disposed perpendicularly. When the second extension portion 532-1 and the third extension portion 532-2 of the bent portion 532 are each formed in a plate shape, the gap between the accommodating portion 511 of the main body 510 of the connector cover 500 and the ICB 330 can be more airtightly covered.

Further, the fourth extension portion 533 protrudes horizontally from the upper end of the main body 510 of the connector cover 500 toward the busbar housing 310.

Thereby, the bent portion 532 and the fourth extension portion 533 form a " ⊏" shape as a whole, and the space between the bent portion 532 and the fourth extension portion 533 forms a rib insert portion 531 (see (b) of FIG. 8). Depending on the arrangement of the connector cover 500, the rib insert portion 531 may also be a shape in which the " ⊏" shape is rotated.

As described above, the coupling rib 311 of the busbar housing 310 is inserted and fitted into the corresponding rib insert portion 531 of the connector cover 500.

Additionally, the connector cover 500 may further include support portions 540 provided at both opposing ends of the main body 510. For further detail, support portions 540 may be provided on both ends of other edges of the main body 510 that connect both ends of the edges on which the first coupling portion 520 and the second coupling portion 530 are provided. For example, if the first coupling portion 520 and the second coupling portion 530 are respectively disposed at the edges in a vertical direction (the height direction of the cell module assembly) on the basis of the main body 510, a pair of support portions 540 may be disposed at the edges in a horizontal direction (the width direction of the cell module assembly) on the basis of the main body 510. That is, a pair of support portions 540 may be located on both side edges of the main body 510.

The flat surface of the support portion 540 facing the ICB 330 (the inner surface of the connector cover 500) may come into contact with the ICB 330, and serves as the support surface 541. A reinforcing rib 542 is further provided on the surface of the support portion 540 that faces the outside (the surface opposite to the surface facing the ICB 330, i.e., the outer surface of the connector cover 500), and thus can supplement the rigidity of the support portion 540.

Such a support portion 540 not only supplements the rigidity of the connector cover 500, while enables the installed connector cover 500 to be stably supported. In addition, the support portion 540 further covers any gaps that may occur between the main body 510 and the ICB 330, thereby further preventing electrolyte or moisture from penetrating into the accommodating portion 511 of the main body 510 of the connector cover 500.

FIG. 9 is a bottom perspective view sequentially showing a state in which the connector cover of FIG. 7 is coupled to the busbar housing assembly. FIG. 10 is a partially enlarged view of (c) of FIG. 9. FIG. 11 is a perspective view showing a state before the connector cover is installed on the busbar housing assembly. FIG. 12 is a perspective view showing a state after the connector cover is installed on the busbar housing assembly.

As shown in (a) of FIG. 9 and FIG. 11, the connector cover 500 is brought toward the ICB 330 disposed in the busbar housing 310.

Next, as shown in (b) of FIG. 9, the hooking protrusion 522 of the first coupling portion 520 of the connector cover 500 is hooked to the lower end of the ICB 330, and the connector cover 500 is then rotated toward the ICB 330, using the lower end of the ICB 330 as a reference axis. Hook coupling is first performed by the first coupling portion 520 of the connector cover 500.

Next, as shown in (c) of FIG. 9 and FIG. 12, the coupling rib 311 of the busbar housing 310 and the rib insertion portion 531 of the second coupling portion 530 of the connector cover 500 are fitted together to complete the installation of the connector cover 500.

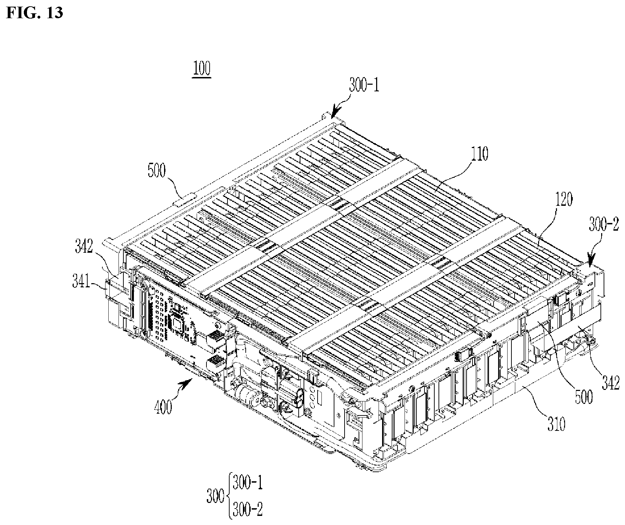

FIG. 13 is a reference drawing of FIG. 1, showing the cell module assembly and electrical unit from a different angle. First, in the embodiment of the present disclosure, as described above, a pair of busbar housing assemblies 300; 300-1, 300-2 are disposed on both side surfaces of the battery cell stack, and each of the pair of busbar housing assemblies 300 is provided with an ICB 330 and a sensing cable 340. In this specification, the sensing cable 340 provided on the busbar housing assembly 300-1 of the pair of busbar housing assemblies 300 and the sensing cable 340 provided on the other of the busbar housing assemblies 300-2 are respectively denoted and classified by reference numerals 341 and 342.

The sensing cable 342 is connected to the sensing cable connector 332 of the ICB 330 of the busbar housing assembly 300-2 - the outer surface of the busbar housing 310 of the busbar housing assembly 300-2 - the outer surface of the end plate 120 - the outer surface of the busbar housing 310 of the busbar housing assembly 300-1 - the BMS 410. More specifically, the sensing cable 342 extends downward from the sensing cable connector 332 of the ICB 330 of the busbar housing assembly 300-2, changes direction at least once, and extends along the width direction (horizontal direction) of the busbar housing 310 of the busbar housing assembly 300-2. Then, it extends across the end plate 120 (extends along the width direction (horizontal direction) of the end plate 120), and then extends again along the width direction (horizontal direction) of the busbar housing 310 of the busbar housing assembly 300-1, and is finally connected to the BMS 410.

Furthermore, the busbar housing assembly 300-2 of FIG. 13 may be similarly provided with a connector cover 500 as described above with reference to FIGS. 1 to 12. Since the further detailed contents are redundant, please refer to those described above.

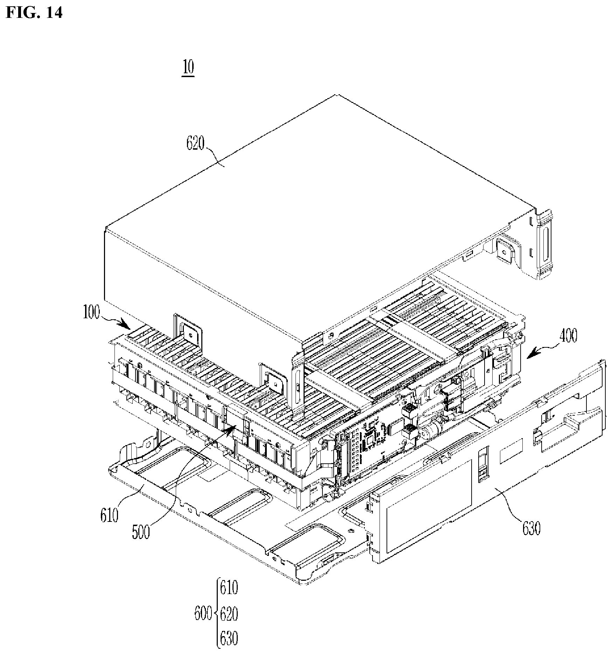

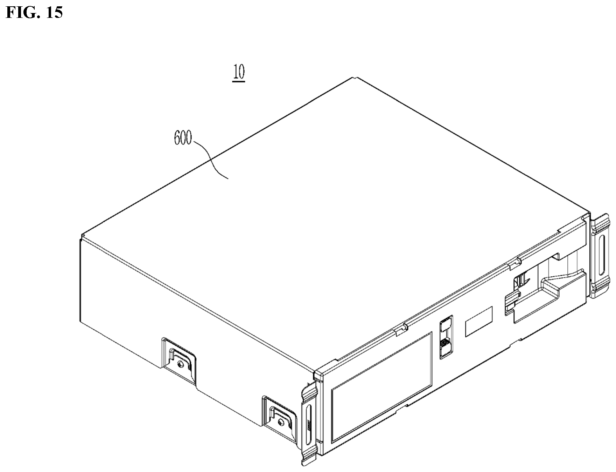

FIG. 14 shows a case where the cell module assembly and electrical unit of FIGS. 1 to 13 are housed in a pack case to form a battery pack. FIG. 15 shows a completed battery pack in which the respective components of the battery pack of FIG. 14 are assembled.

As shown in FIGS. 1 to 13, the battery pack 10 includes a cell module assembly 100 and an electrical unit 400, and the cell module assembly 100 and the electrical unit 400 are housed inside a pack case 600. The battery pack 10 according to an embodiment of the present disclosure includes a connector cover 500, as described above with reference to FIGS. 1 to 13.

The pack case 600 includes a lower case member 610 and an upper case member 620. The lower case member 610 and the upper case member 620 are coupled to surround the outer surface of the cell module assembly 100. For example, the lower case member 610 may have a generally flat plate shape. For example, the upper case member 620 may have a U-shaped frame shape. This may be a structure in which the cell module assembly 100 is seated on the lower case member 610 of a flat plate shape, and the upper case member 620 covers the cell module assembly 100.

However, the present disclosure is not limited to those described above, and modifications and variations may be made in various ways, for example, the lower case member 610 and the upper case member 620 may each have an L-shaped frame, or a roll-pressed mono frame.

Additionally, the pack case 600 further includes a front cover 630 disposed on the front surface of the cell module assembly 100 and the electrical unit 400.

An insulating sheet (not shown) having electrical insulation properties is provided between the cell module assembly 100 and the lower case member 610. An insulating sheet (not shown) having electrical insulation properties is provided between the cell module assembly 100 and the upper case member 620. The insulating sheet may be a film made of, for example, PC(polycarbonate), PET, PP, or a combination thereof.

In addition, an energy storage system (ESS) according to the present disclosure includes one or more of the above-described battery packs according to the present disclosure. Furthermore, the energy storage system according to the present disclosure may further include general components included in the energy storage system, in addition to such a battery pack.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: battery pack
100: cell module assembly
110: battery cell
111: electrode lead
120: end plate
140: strap
200: cut-off member
300: busbar housing assembly
310: busbar housing
311: coupling rib
320: busbar electrode
330: ICB
331: printed circuit board
332: sensing cable connector
340: sensing cable
340a: connector pin
400: electrical unit
410: BMS
420: electrical unit housing
430: power cable
500: connector cover
510: main body
511: accommodating portion
512: support rib
520: first coupling portion
521: first extension portion
522: hooking protrusion
523: reinforcing rib
530: second coupling portion
531: rib insertion portion
532: bent portion
532-1: second extension portion
532-2: third extension portion
533: fourth extension portion
540: support portion
541: support surface
542: reinforcing rib
600: pack case
610: lower case member
620: upper case member
630: front cover

## Claims

1. A cell module assembly comprising:
a battery cell stack in which a plurality of battery cells are stacked;
a busbar housing disposed on a surface that faces the electrode leads of the battery cells,
an Inter Connection Board that is disposed on the busbar housing, and includes a printed circuit board having at least one element for transmitting data between the battery cells and a Battery Management System, and a sensing cable connector to which a sensing cable is coupled, and
a connector cover that covers the outer surfaces of the sensing cable connector and a connector pin of the sensing cable.

2. The cell module assembly of claim 1,
wherein penetration of electrolyte or moisture into the point where the sensing cable and the sensing cable connector are coupled is prevented by the connector cover.

3. The cell module assembly of claim 1,
wherein the connector cover comprises a main body including a recessed accommodating portion, and
at least the sensing cable connector and the connector pin of the sensing cable are accommodated inside the accommodating portion.

4. The cell module assembly of claim 3,
wherein the main body further comprises a support rib protruding along a circumference of the accommodating portion, and
the support rib comes into contact with the outer surface of the Inter Connection Board.

5. The cell module assembly of claim 3,
wherein the connector cover is coupled to at least one of the busbar housing and the Inter Connection Board, and
the connector cover further comprises:
a first coupling portion including a locking hook so as to have a hook coupling structure; and
a second coupling portion including a rib accommodating portion so as to have a fit coupling structure.

6. The cell module assembly of claim 5,
wherein the locking hook of the first coupling portion is hook-coupled to at least one of the Inter Connection Board and the busbar housing, and
the rib accommodating portion of the second coupling portion is fitted to a coupling rib protruding from the busbar housing.

7. The cell module assembly of claim 6,
wherein the first coupling portion is provided in at least one on the lower edge of the main body of the connector cover, and is hook-coupled to the lower end of the Inter Connection Board, and
the second coupling portion is provided on the upper edge of the main body of the connector cover, and is fitted to the coupling rib formed along the upper edge of the busbar housing in the width direction of the busbar housing.

8. The cell module assembly of claim 3,
wherein the connector cover further comprises a first coupling portion for hook coupling, and
the first coupling portion comprises a locking hook.

9. The cell module assembly of claim 8,
wherein the first coupling portion is the locking hook, and comprises:
a first extension portion protrusively extending from the main body; and
a hooking protrusion formed at an end of the first extension portion.

10. The cell module assembly of claim 9,
wherein the first extension portion extends so as to protrude perpendicularly from the main body, and
the hooking protrusion bends and extends again from an end of the first extension portion.

11. The cell module assembly of claim 8,
wherein the first coupling portion comprises an L-shape or a rotated shape thereof.

12. The cell module assembly of claim 3,
wherein the connector cover further comprises a second coupling portion for fitting, and
the second coupling portion includes a rib accommodating portion.

13. The cell module assembly of claim 12,
wherein the second coupling portion configured to form the rib accommodating portion, comprises:
a bent portion including a second extension portion extending from the main body and a third extension portion bending again at the end of the second extension portion, and
a fourth extension portion extending from the main body perpendicular to the second extension portion, and disposed in parallel with the third extension portion.

14. The cell module assembly of claim 13,
wherein the second extension portion and the third extension portion of the bent portion have a plate shape, respectively.

15. The cell module assembly of claim 12,
wherein the second coupling portion comprises a " ⊏" shape or a rotated shape thereof.

16. The cell module assembly of claim 3,
wherein the connector cover further comprises a support portion provided at both ends of the main body that face each other, and
the support portion comprises a support surface that can come into contact with the outer surface of the Inter Connection Board.

17. A battery pack comprising:
the cell module assembly as set forth in claim 1;
an electrical unit that comprises the Battery Management System disposed on one surface of the cell module assembly; and
a pack case that houses the cell module assembly and the electrical unit.

18. An energy storage system comprising the battery pack as set forth in claim 17.
